# EUROPEAN PATENT APPLICATION

(11) **EP 3 654 289 A1**
(43) Date of publication of application: **20.05.2020**
(21) Application number: 19209113.0
(22) Date of filing: 14.11.2019
(51) Int. Cl.: G06T 11/00

(54) **METHODS FOR METAL ARTIFACT REDUCTION IN CONE BEAM RECONSTRUCTION**

(30) Priority: 14.11.2018 US 201862767162 P
(71) Applicant: Carestream Dental LLC, Atlanta, GA 30339 (US)
(72) Inventor: SCHILDKRAUT, Jay S., East Rochester, NY New York 14445 (US)
(74) Representative: Schmidbauer, Andreas Konrad

(57) **Abstract**

Methods for reconstruction of a volume radiographic image acquire 2-D projection images of a subject at a plurality of acquisition angles and generate an initial 3-D volume image formed of image voxels according to the acquired 2-D projection images. An initial 3-D reconstruction metal mask is formed from voxels that have attenuation to x-rays indicative of metal. At least one voxel is removed from the initial 3-D reconstruction metal mask to form a refined 3-D reconstruction metal mask according to a distribution of pixel values that contribute to the corresponding data value for the at least one voxel. One or more 2-D projection images are modified according to the distribution of pixel values. A refined 3-D volume image is generated according to the modified 2-D projection images. A rendering of the refined 3-D volume image displays that includes at least a portion of the refined 3-D reconstruction metal mask.

## Description

### TECHNICAL FIELD

The present disclosure relates generally to medical and dental imaging and, in particular, to image reconstruction methods for Cone-Beam Computed Tomography (CBCT) imaging. More specifically, the disclosure relates to a method for improving CBCT results by reducing metal artifacts in the reconstructed image.

### BACKGROUND OF THE INVENTION

Three dimensional ("3-D") volume imaging can be a valuable diagnostic tool that offers significant advantages over earlier two dimensional ("2-D") radiographic imaging techniques for evaluating the condition of teeth, bones, and other internal structures and organs. 3-D imaging of a patient or other subject has been made possible by a number of advancements, including the development of high-speed imaging detectors, such as digital radiography ("DR") detectors that enable multiple images to be taken in rapid succession.

Cone beam computed tomography ("CBCT" or "cone beam CT") technology offers considerable promise as one type of diagnostic tool for providing 3-D volume images. Cone beam X-ray scanners are used to produce 3-D images of medical and dental patients for the purposes of diagnosis, treatment planning, computer aided surgery, and other purposes. Cone beam CT systems capture volume data sets by using a high frame rate flat panel digital radiography detector and an x-ray source, typically affixed to a gantry that revolves about the subject to be imaged. The CBCT system directs, from various points along its orbit around the subject, a divergent cone beam of x-rays through the subject and to the detector. The CBCT system captures projection images throughout the source-detector orbit, for example, with one 2-D projection image at every degree increment of rotation. The projections are then reconstructed into a 3-D volume image using various techniques. Among the most common methods for reconstructing the 3-D volume image from 2-D projections are filtered back projection ("FBP") and Feldkamp-Davis-Kress ("FDK") approaches.

Although 3-D images of diagnostic quality can be generated using CBCT systems and technology, a number of technical challenges remain. Highly dense objects, such as metallic implants, appliances, surgical clips and staples, dental fillings, and the like can cause various image artifacts that can obscure useful information about the imaged tissue. Dense objects, having a high atomic number, attenuate X-rays in the diagnostic energy range much more strongly than do soft tissue or bone features, so that far fewer photons reach the imaging detector through these objects. For 3-D imaging, the image artifacts that can be generated by metallic and other highly dense objects include dark and bright streaks that spread across the entire reconstructed image. Such artifacts can be due to physical effects such as high noise, radiation scatter, beam hardening, the exponential edge-gradient effect, aliasing, clipping, and non-linear amplification in FBP or other reconstruction methods. The image degradation due to metal or other highly dense features commonly takes the form of light and dark streaks in soft tissue and dark bands around and between highly attenuating objects. These image degradations are commonly referred to as artifacts because they are a result of the image reconstruction process and only exist in the image, not in the scanned object.

These artifacts not only conceal the true content of the imaged object, but can be mistaken for structures in the object. Artifacts of this type can also compromise image quality by masking other structures, not only in the immediate vicinity of the dense object, but also throughout the entire image. At worst, this can falsify computed tomography ("CT") values and even make it difficult or impossible to use the reconstructed image effectively in assessing patient condition or for planning suitable treatment.

Dental volume imaging can be particularly challenging because of the relative complexity of structures and shapes and because objects of very different densities are closely packed together in a relatively small space. Various types of fillings, implants, crowns, and prosthetic devices of different materials can be encountered during the scan. It can be difficult to distinguish high-density metal features in the intraoral images due to their relative dimensions, due to space and geometric constraints, and due to imaging characteristics of surrounding tooth, bone, and tissue features. Beam hardening effects that result from scanning high density materials can also impact image quality.

Although some progress has been made to form volume image data that distinguishes features of different densities, there is still considerable room for improvement. Particularly with increasing use of implants and other prosthetic devices in dental and overall medical applications, there is significant interest in reducing the occurrence and impact of metal artifacts in intraoral CBCT imaging with methods that offer improved performance and computational efficiency.

### SUMMARY OF THE INVENTION

Broadly described, the present invention comprises methods for reducing metal artifacts in CBCT volume images. Methods of the present invention provide ways for distinguishing voxels that represent actual metal content from nearby voxels that contain artifacts. According to an example embodiment of the present invention described herein, a method for reconstruction of a volume radiographic image is executed at least in part on a computer and comprises steps of: (a) acquiring a plurality of 2-D projection images of a subject at a plurality of acquisition angles; (b) generating an initial 3-D volume image formed of image voxels according to the acquired 2-D projection images; (c) forming an initial 3-D reconstruction metal mask from voxels that have attenuation to x-rays indicative of metal; (d) removing at least one voxel from the initial 3-D reconstruction metal mask to form a refined 3-D reconstruction metal mask according to a distribution of pixel values that contribute to the corresponding data value for the at least one voxel; (e) modifying one or more 2-D projection images according to the distribution of pixel values; and (f) generating a refined 3-D volume image according to the modified 2-D projection images.

### BRIEF DESCRIPTION OF THE DRAWINGS

The foregoing features and advantages of the disclosure will be apparent from the following more particular description of the embodiments of the disclosure, as illustrated in the accompanying drawings. The elements of the drawings are not necessarily to scale relative to each other.
FIG. 1 is a schematic diagram that shows the scanning activity of a conventional CBCT imaging apparatus for acquiring the individual 2-D projection images that are used to form a 3-D volume image.
FIG. 2A shows forward projection through a single voxel of the 3-D volume reconstruction.
FIG. 2B is a schematic diagram that shows how forward projection is executed for a subset of reconstruction voxels according to an embodiment of the present disclosure.
FIG. 3 shows a 3-D volume reconstruction of intraoral features showing metal and metal artifacts.
FIG. 4 shows metal and artifact pixels in an acquired 2-D projection image.
FIG. 5 shows metal and artifact pixels in an acquired 2-D projection image taken at a different angle than that of FIG. 4.
FIG. 6 is a graph that shows how a method of the present invention can distinguish between a pixel representing metal content and a pixel that does not represent metal but contributes to a metal artifact.
FIG. 7 is a flowchart representation of a metal artifact reduction method according to an embodiment of the present disclosure.
FIG. 8 is a flowchart representation of a method for refining a reconstruction metal mask according to an embodiment of the present disclosure.

### DETAILED DESCRIPTION OF THE EXAMPLE EMBODIMENTS

The following is a detailed description of example embodiments of the disclosure, reference being made to the drawings in which the same reference numerals identify the same elements of structure or steps of a method in each of the several figures. In the drawings and in the text that follows, like components are designated with like reference numerals, and similar descriptions concerning components and arrangements of components or interaction of components already described are omitted. Where used, the terms "first", "second", and so on, do not necessarily denote any ordinal or priority relationship, but are simply used to more clearly distinguish one element from another.

In the context of the present disclosure, the term "volume image" is synonymous with the terms "3-dimensional image" and "3-D image". Embodiments of the present disclosure are particularly well suited for suppressing the types of metal artifacts that occur in 3-D volume images, including cone-beam computed tomography (CBCT) as well as fan-beam CT images.

For the image processing steps described herein, the terms "pixels" for picture image data elements are conventionally used with respect 2-D imaging and image display. The term "voxels" for volume image data elements, is used with respect to 3-D imaging. It should be noted that the 3-D volume image is itself synthesized from image data obtained as pixels on a 2-D sensor array and displays as a 2-D image from some angle of view. Thus, some types of 2-D image processing and image analysis techniques can be applied to the 3-D volume image data. In the description that follows, some of the processing methods or techniques described as operating upon pixels may alternately be applied to operate upon the 3-D voxel data that is stored and represented in the form of 2-D pixel data for display. In the same way, a number of methods or techniques that operate upon voxel data can also be applied to operate upon pixels.

In the subsequent description, pixels and voxels can be described as "metal" or to relate to a "metal artifact" or simply an "artifact" if they represent image content that is correspondingly metal or very high density or a related artifact that appears to represent metal.

In the context of the present disclosure, a material is considered to have attenuation indicative of metal if it has attenuation exceeding that of tooth enamel. Tooth enamel has the highest attenuation to x-rays of any naturally occurring material in the healthy human anatomy.

In the context of the present disclosure, the noun "projection" may be used to mean "projection image", referring to the 2-D image that is captured and used, along with other 2-D projection images, to reconstruct the volume image. In addition, "projection" can also refer to calculated projections for a simulated cone beam computed tomography system that are obtained by calculating the attenuation of X-rays as they propagate through a 3-D image volume.

The term "set", as used herein, refers to a non-empty set, as the concept of a collection of elements or members of a set is widely understood in elementary mathematics. The term "subset", unless otherwise explicitly stated, is used herein to refer to a non-empty proper subset, that is, to a subset of the larger set, having one or more members. For a set "S", a subset may comprise the complete set "S". A "proper subset" of set "S", however, is strictly contained in set "S" and excludes at least one member of set "S".

The embodiments of the present disclosure include a method for reducing artifacts in CBCT reconstructions that are caused by metal features and other highly X-ray attenuating materials such as those used for implants that are placed within the body. In the context of the present disclosure, high-density objects that correctly appear as metal in a 2-D projection image or its 3-D reconstruction can also cause what is commonly known as metal artifacts in surrounding portions of the volume image, are termed "metal" objects or "metal features". This includes objects formed from materials having a relatively high attenuation coefficient and may include some non-metal materials.

The attenuation coefficient for a material is not a fixed value, but varies and is dependent, in part, on the photon energy level. For example, a metal object made of titanium has an attenuation coefficient of about 0.8 cm⁻¹ in the 80 KeV range. Bone has a typical attenuation coefficient of about 0.6 cm⁻¹ in the 80 KeV range. Any object having attenuation higher than that of tooth enamel, such as at or near that of titanium or higher, can be considered to be a metal object. It should be noted, for example, that objects formed from some types of highly dense composite materials can have a similar effect on image quality as objects formed from metal or alloys. The methods of the present disclosure address the type of artifact generated by such objects, of whatever material type or other composition.

Materials commonly used and known to cause at least some type of "metal artifact" in radiographs and volume images include metals such as iron, cobalt, chromium, titanium, tantalum, and alloys including cobalt chromium alloys, for example, as well as some ceramic compositions and various composite materials such as high density composite plastics. Examples of typical implants include, but are not limited to, various types of prostheses and associated fasteners, including various types of pins, plates, screws, nails, rods, caps, crowns, bridges. fixtures, braces, dentures, and fillings. The implants are usually formed of metal and/or ceramic material.

CBCT imaging apparatuses and the imaging methods used to obtain 3-D volume images using such systems are well known in the diagnostic imaging art and are, therefore, not described in detail in the present application. Some example methods and approaches for forming 3-D volume images from the source 2-D images, projection images that are obtained in operation of the CBCT imaging apparatus can be found, for example, in the teachings of U.S. Patent No. 5,999,587 entitled "Method of and System for Cone-Beam Tomography Reconstruction" to Ning et al. and of U.S. Patent No. 5,270,926 entitled "Method and Apparatus for Reconstructing a Three-Dimensional Computerized Tomography (CT) Image of an Object from Incomplete Cone Beam Data" to Tam.

In typical applications, a computer or other type of dedicated logic processor for obtaining, processing, and storing image data is part of the CBCT system, along with one or more displays for viewing image results. A computer-accessible memory is also provided, which may be a memory storage device used for longer term storage, such as a device using magnetic, optical, or other data storage media. In addition, the computer-accessible memory can comprise an electronic memory such as a random-access memory (RAM) that is used for shorter term storage, such as employed to store a computer program having instructions for controlling one or more computers to practice the methods according to the present disclosure.

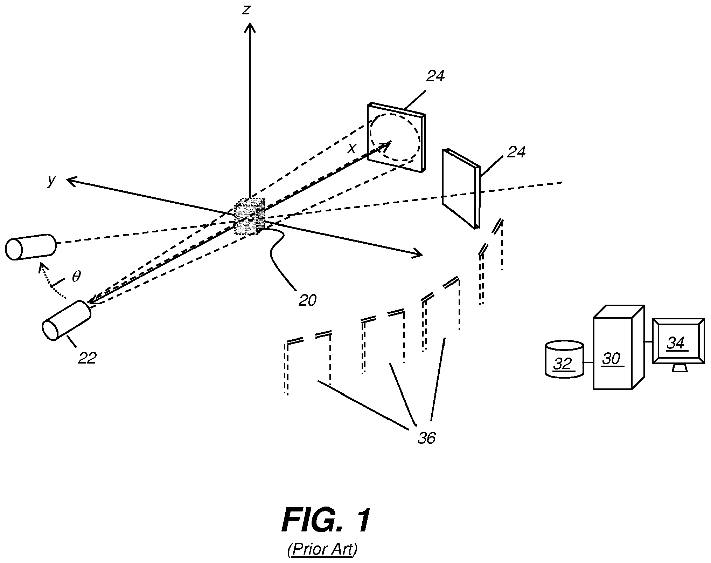

In order to more fully understand the methods of the present disclosure and the problems addressed, it is instructive to review principles and terminology used for CBCT image capture and reconstruction. Referring to the perspective view of FIG. 1, there is shown, in schematic form and using enlarged distances for clarity of description, the activity of a conventional CBCT imaging apparatus for acquiring the individual 2-D projection images 36 that are used to form a 3-D volume image. A cone-beam radiation source 22 directs a cone of radiation toward a subject 20, such as a patient or other subject. A sequence of images is obtained in rapid succession at varying projection angles, *θ*, about the subject, such as one image at each 1-degree angle increment in a 200-degree orbit. Relative x, y, z coordinates are shown for reference. A DR detector 24 is moved to different imaging positions about subject 20 in concert with corresponding movement of radiation source 22. FIG. 1 shows a representative sampling of DR detector 24 positions to illustrate how these images are obtained relative to the position of subject 20. Once the needed 2-D projection images are captured in this sequence, a suitable imaging method, such as filtered back projection (FBP) or other conventional method, is used for generating the 3-D volume image. Image acquisition and program execution are performed by a computer 30 or by a networked group of computers 30 that are in image data communication with DR detectors 24. Image processing and storage is performed using a computer-accessible memory 32. A rendering of the 3-D volume image can be presented on a display 34. The rendering can be, for example and not limitation, a 2-D slice of the 3-D volume.

One task in metal artifact reduction is to distinguish voxels in the 3-D reconstruction that are metal from nearby voxels that appear to be highly dense but are, in fact, reconstruction artifacts and not metal. Typical metal artifacts can appear as bright streaks in the reconstruction, extending outward from metal features and difficult to distinguish solely according to voxel appearance.

Embodiments of the present disclosure address the problem of clearly distinguishing between true metal features and metal-like artifacts in initial reconstruction, so that the artifact content can be corrected in final reconstruction. Unlike previously described metal artifact reduction methods, metal is distinguished from metal-like artifacts using an initial 3-D reconstruction that has been generated using a sequence of 2-D projection images. An initial 3-D metal mask is coarsely defined according to relative voxel intensity and can comprise both metal and artifact content. Forward projection, performed by directing rays through the reconstruction metal mask from numerous source-detector angles as described subsequently, identifies candidate pixels in the corresponding 2-D projection images that contribute to the voxel intensity value and that appear to represent metal content. The range of values for these pixels can then be analyzed to determine which pixels and, in turn, which voxels, truly represent metal content and should be retained in the metal mask and which can be removed from the metal mask.

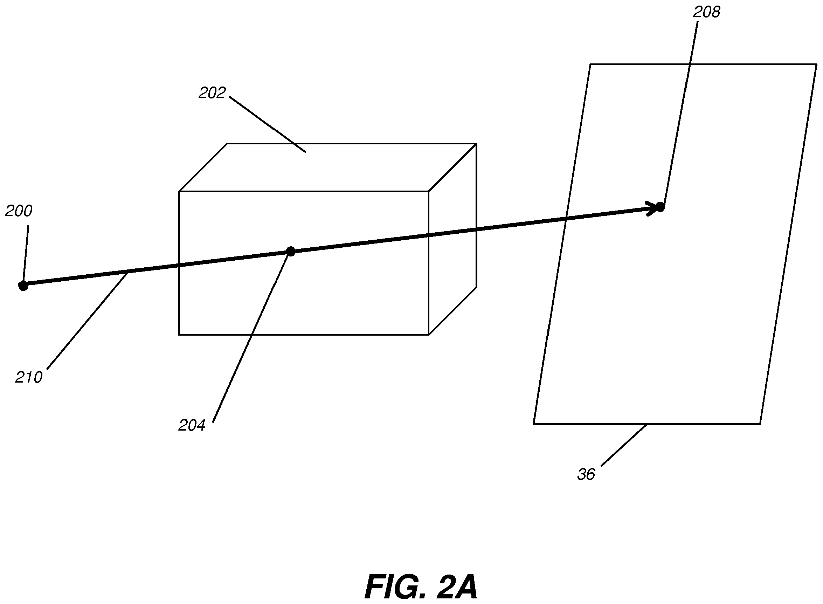

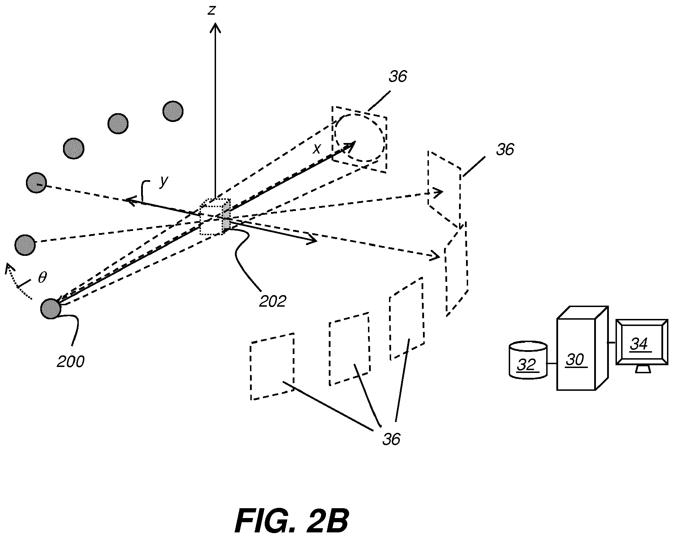

The schematic diagrams of FIGS. 2A and 2B show the basic mechanism of forward projection, as understood in the volume imaging arts and as used in an embodiment of the present disclosure. As suggested in FIG. 2B, forward projection is a calculation process that mimics the initial back-projection process shown in FIG. 1. In forward projection, the calculated 3-D volume reconstruction 202 is the subject of a computed "scan", rather than the imaged object (i.e., rather than scanning subject 20 in FIG. 1). Forward projection simulates the original 2-D projection image acquisition by scanning the reconstruction from different angular positions of a focal spot 200.

In practice, the same set of angular positions that is used in back-projection for acquiring 2-D projection images is typically used for forward projection as described herein. For each forward-projected voxel, from each angular position, a calculated ray extends through the voxel to a corresponding point on the acquired 2-D projection image 36. FIG. 2A identifies this point as pixel location 208. In this way, forward projection traces back from the voxel location 204 to indicate a pixel location 208. In reconstruction processing that is used to form the voxels of the 3-D reconstruction image, the pixel at pixel location 208 contributes to the value of the voxel at voxel location 204. The voxel value is computed from contributing pixels in each of the projection images that are acquired; the forward projection process shown in FIGS. 2A and 2B provides a mechanism for identifying the contributing pixels for each voxel in the reconstruction.

In forward projection processing, every voxel location in the 3-D volume reconstruction can thus be associated with a corresponding pixel location for each 2-D forward projection image. The schematic of FIG. 2A shows a virtual X-ray source focal spot 200. A line 210 extended from source focal spot 200 represents a ray which passes through voxel 204 and intersects 2-D projection image 36 acquired by the detector at a pixel location 208. Voxel location 204 in the reconstruction thus relates to pixel location 208 in the projection image 36. Pixel location 208 is the projection of reconstruction location 204 onto the detector.

Pixel location 208 may correspond to a single pixel. In practice, however, pixel location 208 may correspond to a plurality of adjacent pixels, with interpolation used for subsequent value assignment, as described in more detail subsequently.

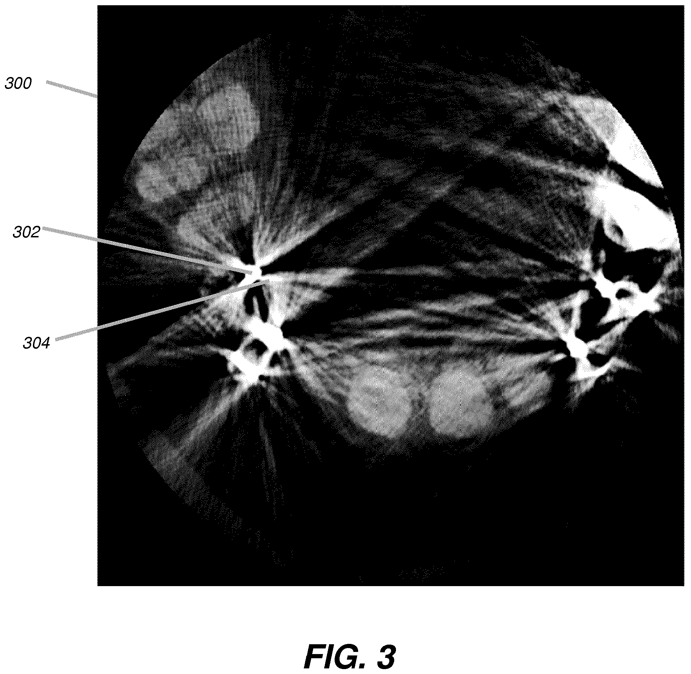

Referring to FIG. 3, a slice of a reconstruction 300 is shown along with the voxel location of a metal feature 302 and a metal-related artifact 304. As FIG. 3 shows, metal artifacts often appear as light and dark streaks and dark bands around and between highly attenuating objects in the 3-D volume reconstruction. As noted previously, these artifacts are a result of the image reconstruction process and exist only in the reconstructed volume image, not in the scanned object.

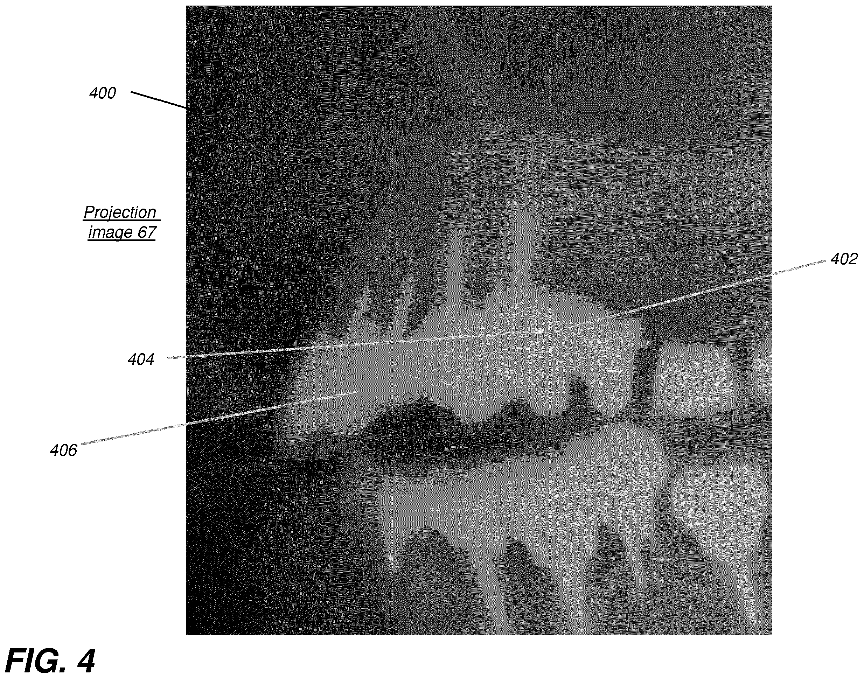

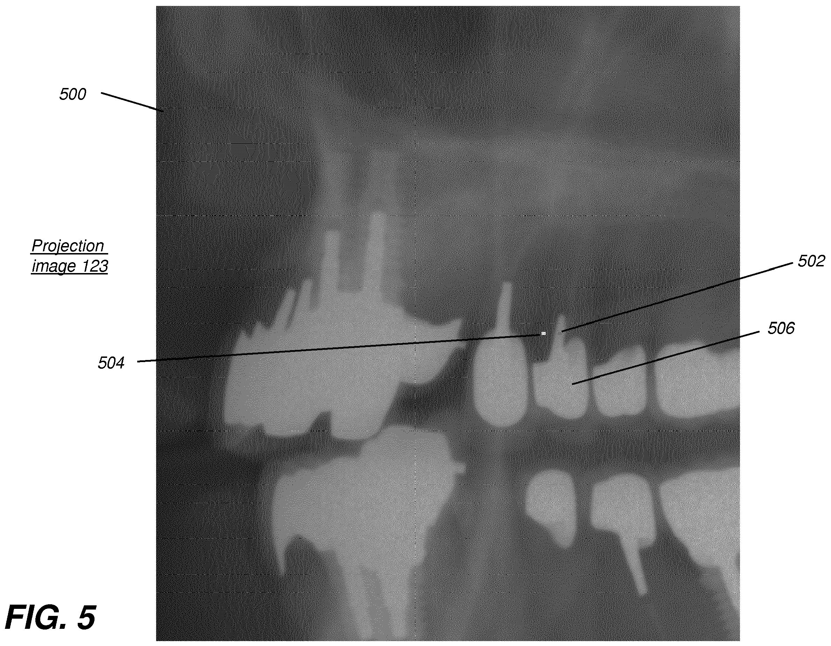

FIGS. 4 and 5 compare, for two of the acquired projection images, pixels known to be metal and artifact, corresponding to voxels for metal feature 302 and artifact 304 in FIG. 3. FIG. 4 shows an acquired projection image 400, numbered projection image 67 in a series of acquired 2-D projection images. A pixel location 402 indicates the corresponding location of metal feature 302 in reconstruction 300 of FIG. 3. Also shown, at a location 404, is the corresponding pixel location of a metal artifact in the reconstruction, corresponding to artifact 304 in FIG. 3. Both locations 402 and 404 lie within a shadow of metal 406 in projection image 400. It can be seen that, based merely on projection image 400, it is not possible to distinguish between pixels for metal feature 302 and metal artifact 304.

FIG. 5 shows another acquired projection image 500, acquired at a different angle. Acquired projection image 500, numbered projection image 123 shows, at a pixel location 502, the corresponding location of the metal feature 302; at a location 504, FIG. 5 shows metal-related artifact 304. In the view of FIG. 5, it is clear that location 502 lies inside the shadow of metal 506 and truly represents a metal feature; location 504 lies outside of metal or other high-density content and corresponds to an artifact.

As was described with respect to FIG. 1, the reconstruction 3-D volume is generated as a group of voxels. The value assigned to each voxel is computed based on the values of one or more corresponding pixels in each acquired 2-D projection image. An embodiment of the present disclosure uses this relationship of 2-D projection image pixels to 3-D reconstruction image voxels in order to improve the 3-D reconstruction and reduce or eliminate metal artifacts. That is, methods of the present disclosure distinguish 3-D reconstruction voxels that truly represent metal features from voxels that are artifacts by identifying and analyzing the corresponding 2-D pixel data that has been used to form the reconstruction voxels.

As the example projection images in FIGS. 4 and 5 showed, 2-D pixels that are related to image artifacts can be difficult to detect in projection images acquired at some angles (for example, FIG. 4), but clearly visible in projection images acquired at other angles (for example, FIG. 5). Embodiments of the present disclosure analyze the pattern of data for suspected or "candidate" metal pixels over a range of successive projection images in order to determine whether or not the data acquired at each angle consistently indicates metal. Where there is significant deviation from a pattern that indicates metal, the corresponding pixel can then be flagged as contributing to a metal artifact. Subsequent processing steps can then improve the 3-D reconstruction when non-metal pixels are distinguished from pixels that truly indicate metal features.

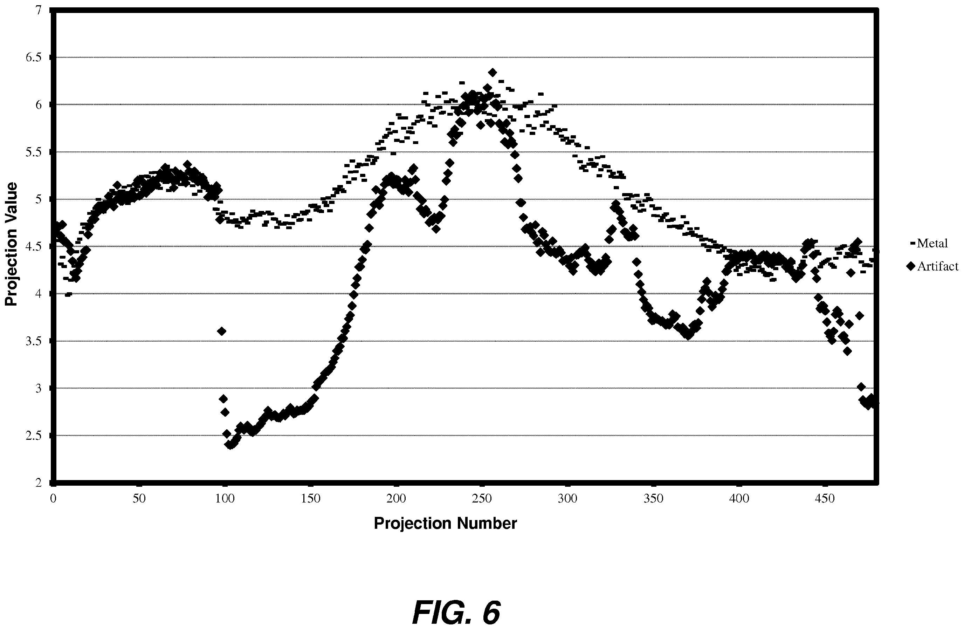

The graph of FIG. 6 shows how the analysis of the methods of the present invention can distinguish a pixel representing metal content from a pixel that does not represent metal but can contribute to a metal artifact. For each of about 480 2-D projection images in a CBCT sequence, each at a unique projection acquisition angle, projection values for a known metal pixel are compared against projection values for a pixel that forms an artifact. The metal pixel corresponds to metal feature 302 in FIG. 3 and pixels 402 and 502 in FIGS. 4 and 5, respectively. The artifact pixel corresponds to artifact 304 in FIG. 3 and pixels 404 and 504 in FIGS. 4 and 5, respectively.

Thus, it can be seen that FIG. 6 shows the distribution of pixel values that contribute to a single voxel in the reconstruction metal mask. It should be noted that each 2-D projection value that is used for 3-D voxel value computation may be obtained from a single pixel at the forward projection location as described previously with reference to FIGS. 2A and 2B. However, in practice, it is likely that the corresponding projection value from each projection image is an interpolated value calculated from two or more adjacent pixels in the 2-D projection image at the vicinity of a forward projection location.

In FIG. 6, the projection pixel values are expressed as the negative natural log (-In) of X-ray attenuation. When expressed in this manner, high attenuation is indicated by high pixel values. Alternatively, the projection pixels value could correspond to X-ray exposure. In that case, a low pixel value indicates high attenuation, and the subsequent analysis would, accordingly, be the inverse of that described herein.

For a portion of the projection acquisition angles in FIG. 6, such as between projection number 0 and projection number 100, projection values for the artifact pixel track values for the metal pixel in many of the projection images. However, particularly over the range between about projection number 100 and projection number 200, the projection values corresponding to the artifact pixel are pronouncedly lower than projection values for the metal pixel. There are also marked differences in the range near projection number 300, near projection number 370, and above projection number 450.

It is clear from the graph of FIG. 6 that analysis of the variation of the value of the projection pixels which correspond to a voxel in a reconstruction can help to distinguish voxels in a reconstruction that correspond to metal features in the scanned object from voxels that are not metal, but appear as metal due to image artifacts. Measurement data can apply threshold values, averaging, or use the dynamic range of pixel values in order to distinguish artifact pixel content from metal pixel content.

The metal artifact reduction methods (MAR) of the present invention apply the analysis described with reference to FIGS. 3-6 to detecting and correcting for artifact content. In should be understood, that any MAR method that makes use of a metal mask in the 3-D reconstruction domain can benefit from this approach to more accurately distinguish pixels that are truly metal from pixels that contribute to artifacts that appear in the 3-D reconstruction.

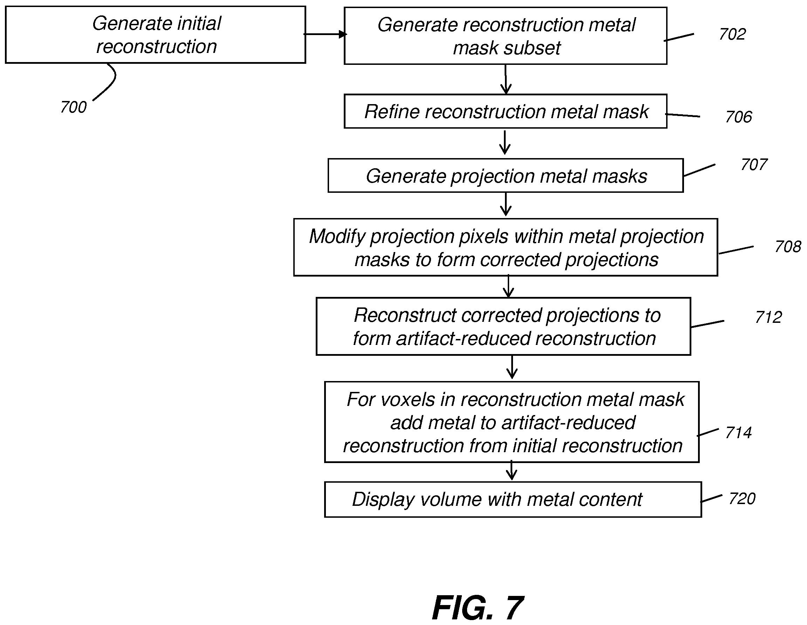

FIG. 7 shows the sequence of steps in an MAR method according to an embodiment of the present disclosure. In a reconstruction step 700, a plurality of 2-D projection images are acquired as described with reference to FIG. 1 and a reconstruction algorithm is applied in order to form an initial 3-D volume reconstruction. Any of a plurality of reconstruction methods known in the art can be used for generating the reconstruction, including filtered back projection (FBP), FDK (Feldkamp-Davis-Kress) algorithm, iterative algebraic reconstruction, or other method.

The initial 3-D reconstruction that is formed in step 700 can have a subset of voxels that are indicative of metal features as well as voxels that represent accompanying metal artifacts. Subsequent processing is directed to eliminating or reducing metal artifacts in the 3-D volume reconstruction subset. In a metal mask generation step 702, an initial reconstruction metal mask is formed. The reconstruction metal mask assigns an arbitrary value (such as 255 or 0) to the subset of reconstruction voxels that appear to be metal. Initially, these candidate voxels can include both metal and artifact voxels. Subsequent processing then refines this subset by eliminating voxels that represent metal artifacts.

The voxel code values in the reconstruction are, in principle, a measure of the X-ray attenuation coefficient of the material. For example, these values can be expressed in units of inverse cm. Alternatively, the voxel code values are expressed in Hounsfield units. To form the initial metal mask, step 702 can apply a threshold value to the reconstruction voxels, so that voxels that exceed the threshold are included in the metal mask. Preferably, an adaptive threshold is used, such as a threshold that increases in the vicinity of high voxel values.

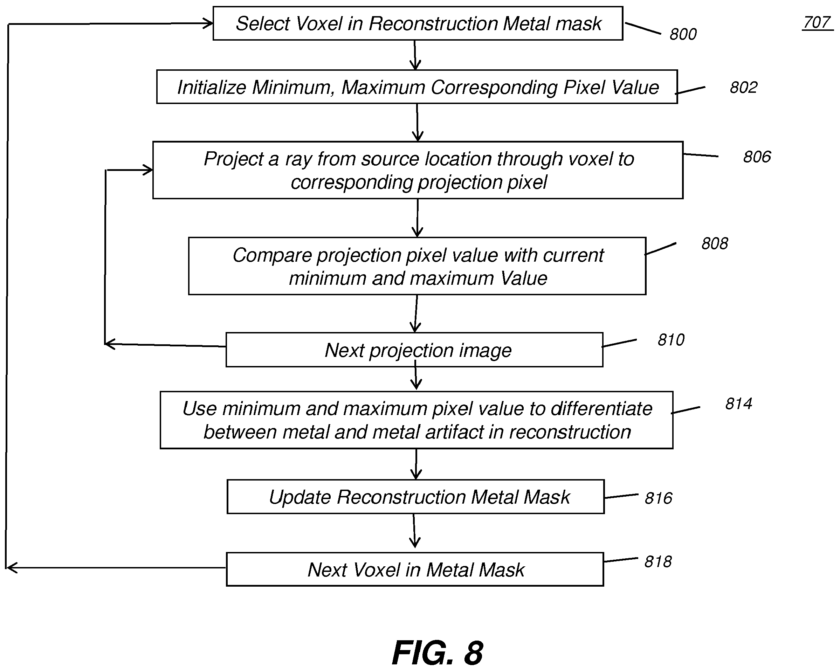

A metal mask refinement step 706 in FIG. 7 refines the metal mask by systematically checking each voxel in the reconstruction, eliminating voxels from the metal mask subset using the method described subsequently with reference to FIG. 8.

In a projection metal mask generation step 707 in FIG. 7, forward projection through the initial reconstruction, as was described with reference to FIGS. 2A and 2B, forms a metal mask for each 2-D projection image. A projection pixel modification step 708 then modifies the projection values within the 2-D metal mask to form corrected 2-D projection images. Step 708 typically involves a process of interpolation of pixel values which are outside of the metal mask.

A second reconstruction step 712 generates a reconstruction from the corrected projection images of step 708; the resulting reconstruction retains the metal content, but with reduced metal artifacts. A metal voxel value assignment step 714 identifies voxels that contain metal and that lie within the reconstruction metal mask. Step 714 then assigns values from the initial reconstruction to these voxels; this step is equivalent to replacing these voxels with initial reconstruction voxels.

As a result of step 714 processing, if the reconstruction metal mask still includes metal artifacts, these artifacts remain in the final reconstruction. A display step 720 displays the volume with metal content and with reduced metal artifacts.

FIG. 8 expands metal mask refinement step 706 (see FIG. 7) according to an embodiment of the present disclosure. In a voxel selection step 800, a candidate voxel is selected from the subset of voxels initially assigned to the reconstruction metal mask generated in metal mask generation step 702. Subsequent steps in the FIG. 8 sequence then determine whether or not the candidate voxel is retained in the reconstruction metal mask or removed from the subset of voxels that form the reconstruction metal mask.

In an initialization step 802, a minimum and maximum corresponding projection value are initialized in order to define a suitable range of values for pixels that correspond to voxels in the reconstruction. Step 802 identifies a minimum value that is lower than the range of possible projection pixel values for subsequent processing and a maximum value that is higher than the range of possible projection pixel values.

For each voxel, subsequent steps 806, 808, and 810 iteratively cycle through each projection image, using forward projection to identify a corresponding projection pixel location, or a grouping of adjacent pixels about a projected location that collectively serve as a projection pixel, for testing against the minimum and maximum values assigned in initialization step 802. A forward projection step 806 projects a ray from the source location through the voxel and to the projection image (FIGS. 1-2B). This identifies a projection pixel. A comparison step 808 then compares the projection pixel value against the identified maximum and minimum values. A looping step 810 continues this processing for each projection image.

It should be noted that a partial sampling of the full set of projection images can be processed, such as processing every other projection image for example, such as in order to reduce processing time. In general, it is beneficial to process the forward projection data for a large range of angles in the loop of steps 806, 808, and 810 and to process as large a sampling as possible. This can be particularly useful in cases where only a small range of 2-D projection images clearly show the metal/artifact status of a projection pixel.

In step 806, the location of the corresponding projection pixels can be at a location that lies between actual pixel locations. In such a case, interpolation can be used in order to calculate the corresponding pixel value.

After each projection image is processed, a comparison step 814 executes, in which the minimum and maximum corresponding pixel values specified in initialization step 802 are used to classify the voxel as metal or metal artifact. An update step 816 then executes, updating the metal mask according to the classification in step 814. A voxel classified as being part of a metal artifact is removed from the reconstruction metal mask subset. A voxel that is classified as representative of a metal feature is retained in the reconstruction metal mask subset and forms part of the final metal mask. A looping step 818 returns processing back to step 800 for selecting the next candidate voxel in the initial reconstruction metal mask.

It should be noted that the use of minimum and maximum projection pixel values provides one useful technique for voxel classification. However, other methods can be used for determining voxel membership in the reconstruction metal mask subset.

In an example embodiment of the present invention, the methods are implemented by a computer program with stored instructions that control system functions for image acquisition and image data processing, such as using the control logic processor of the present disclosure. As can be appreciated by those skilled in the image processing arts, a computer program of an example embodiment can be executed by a suitable, general-purpose computer system, such as a personal computer or workstation that acts as an image processor (CPU), when provided with a suitable software program so that the processor operates to acquire, process, transmit, store, and display data as described herein. Many other types of computer systems architectures can be used to execute the computer program of the present disclosure, including, for example and not limitation, an arrangement of networked processors.

The computer program for performing the method of the present disclosure may be stored in a computer readable storage medium. This medium may comprise, for example; magnetic storage media such as a magnetic disk such as a hard drive or removable device or magnetic tape; optical storage media such as an optical disc, optical tape, or machine readable optical encoding; solid state electronic storage devices such as random access memory (RAM), or read only memory (ROM); or any other physical device or medium employed to store a computer program. The computer program for performing the method of the present disclosure may also be stored on computer readable storage medium that is connected to the image processor by way of the internet or other network or communication medium. Those skilled in the image data processing arts will further readily recognize that the equivalent of such a computer program product may also be constructed in hardware.

It is noted that the term "memory", equivalent to "computer-accessible memory" in the context of the present disclosure, can refer to any type of temporary or more enduring data storage workspace used for storing and operating upon image data and accessible to a computer system, including a database. The memory could be non-volatile, using, for example, a long-term storage medium such as magnetic or optical storage. Alternately, the memory could be of a more volatile nature, using an electronic circuit, such as random-access memory (RAM) that is used as a temporary buffer or workspace by a microprocessor or other control logic processor device. Display data, for example, is typically stored in a temporary storage buffer that is directly associated with a display device and is periodically refreshed as needed in order to provide displayed data. This temporary storage buffer may be a memory, as the term is used in the present disclosure. Memory is also used as the data workspace for executing and storing intermediate and final results of calculations and other processing. Computer-accessible memory can be volatile, non-volatile, or a hybrid combination of volatile and non-volatile types.

The invention has been described herein with particular reference to example embodiments, but it will be understood that variations and modifications can be affected within the spirit and scope of the invention. The presently disclosed embodiments are therefore considered in all respects to be illustrative and not restrictive. The scope of the invention is indicated by the appended claims, and all changes that come within the meaning and range of equivalents thereof are intended to be embraced therein.

## Claims

1. A method for reconstruction of a volume radiographic image, the method executed at least in part on a computer and comprising:
a) acquiring a plurality of 2-D projection images of a subject at a plurality of acquisition angles;
b) generating an initial 3-D volume image formed of image voxels according to the acquired 2-D projection images;
c) forming an initial 3-D reconstruction metal mask from voxels that have attenuation to x-rays that is indicative of metal;
d) removing at least one voxel from the initial 3-D reconstruction metal mask to form a refined 3-D reconstruction metal mask according to a distribution of pixel values that contribute to the corresponding data value for the at least one voxel;
e) modifying one or more 2-D projection images according to the distribution of pixel values; and
f) generating a refined 3-D volume image according to the modified 2-D projection images.

2. The method of claim 1, wherein the method further comprises a step of displaying a rendering of the refined 3-D volume image that includes at least a portion of the refined 3-D reconstruction metal mask.

3. The method of claim 1, wherein the step of generating the initial 3-D volume image comprises using a filtered-back projection reconstruction.

4. The method of claim 1, wherein the step of generating the initial 3-D volume image comprises using an iterative algebraic reconstruction.

5. The method of claim 1, wherein the step of removing the at least one voxel comprises using forward projection through the initial 3-D reconstruction metal mask.

6. A method for reconstruction of a volume radiographic image, the method executed at least in part on a computer and comprising:
a) acquiring a plurality of 2-D projection images of a subject at a plurality of acquisition angles;
b) generating an initial 3-D volume image according to the acquired 2-D projection images;
c) forming a 3-D reconstruction metal mask that includes an initial subset of voxels, wherein the elements of the initial subset initially include voxels representing metal content and voxels that form a metal artifact;
d) identifying one or more artifact voxels in the initial subset by:
(i) identifying one or more pixels in each of the plurality of 2-D projection images that contribute to the artifact voxel value in the generated initial 3-D reconstruction;
(ii) classifying the one or more pixels as indicating an artifact according to pixel values in the plurality of 2-D projection images;
e) removing the one or more artifact voxels from the initial subset and forming a refined subset of voxels;
f) forming a refined 3-D reconstruction metal mask according to the refined subset of voxels;
g) modifying one or more of the acquired 2-D projection images according to the refined 3-D reconstruction metal mask; and
h) generating a refined 3-D volume image according to the modified acquired 2-D projection images.

7. The method of claim 6, wherein the method further comprises a step of rendering a view of the generated refined reconstruction on a display, wherein the rendered view includes at least a portion of the refined metal mask.

8. The method of claim 6 wherein the step of identifying the one or more pixels that contribute to the artifact voxel comprises forward projection through the voxel at one or more of the acquisition angles.

9. The method of claim 6, wherein the method further comprises a step of transmitting or storing the rendered view.

10. The method of claim 6, wherein the step of acquiring the plurality of 2-D projection images is performed on a cone-beam computed tomography apparatus.

11. The method of claim 6, wherein the method further comprises a step of assigning a predetermined data value to voxels within the refined metal mask.
